# EUROPEAN PATENT SPECIFICATION

(11) **EP 1 491 910 B1**
(45) Date of publication and mention of the grant of the patent: **13.12.2006**
(21) Application number: 04253824.9
(22) Date of filing: 25.06.2004
(51) Int. Cl.: G01S 1/00, G01S 5/02

(54) **Radio receiver and GPS receiver**
Funkempfänger und GPS-Empfänger
Récepteur radio et récepteur GPS

(30) Priority: 27.06.2003 JP 2003184823
(43) Date of publication of application: 29.12.2004
(73) Proprietor: SEIKO EPSON CORPORATION, Tokyo 160-0811 (JP)
(72) Inventor: Aisawa, Susumu, c/o Seiko Epson Corporation, Suwa-shi Nagano-ken 392-8502 (JP)
(74) Representative: Sturt, Clifford Mark

(56) References cited:
- WO-A-00/69020
- US-A- 5 691 727
- US-A- 5 712 641
- US-A- 5 903 238
- US-A- 5 995 044
- US-B1- 6 252 546

## Description

The present invention relates to a radio receiver which receives a radio wave having the characteristics of a circular polarization, and more particularly to a radio receiver which can decide the degree of the influence of the multiple paths of its received radio wave.

Also, the present invention relates to a GPS receiver which finds a current position by receiving radio waves from a plurality of GPS (Global Positioning System) satellites, and more particularly to a GPS receiver which can decide the degrees of the influences of the multiple paths of its received radio waves and which can find a current position by employing the radio waves exempt from the influences.

Heretofore, a GPS receiver has been such that the distances between the GPS receiver itself and three or more GPS satellites are computed by receiving radio waves from the individual GPS satellites and using the arrival time periods thereof, and that a current position is computed from the results of the computations.

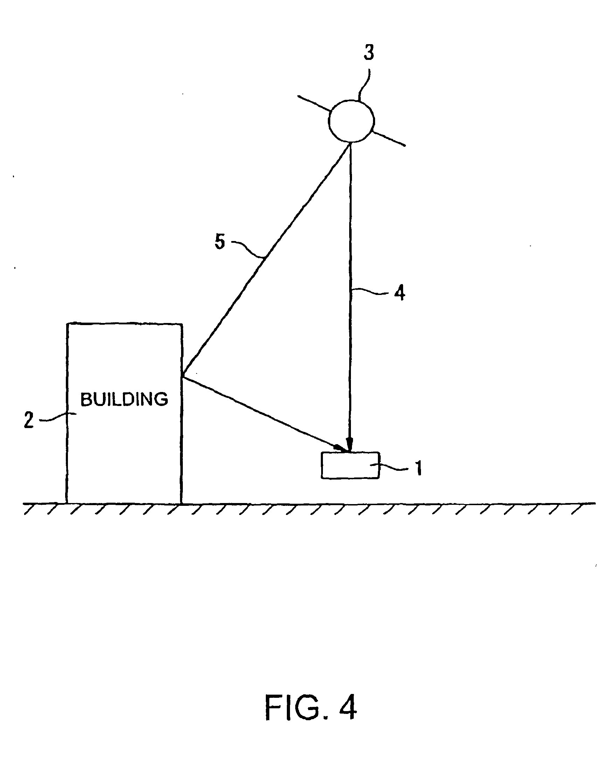

In this regard, as shown in Fig. 4, when a building 2 or the like large Object reflecting radio waves exists near the receiving position of the GPS receiver 1, multiple paths appear. The expression "multiple paths" signifies the phenomenon that the GPS receiver 1 simultaneously receives a reflected wave 5 from the building 2, in addition to a direct wave 4 from the GPS satellite 3.

Due to the multiple paths, the GPS receiver erroneously measures the distances between the GPS receiver itself and the GPS satellites. This results in the drawback that also a positioning result becomes a value having an error.

In order to solve such a drawback, a prior-art GPS receiver has tried to exclude signals having undergone the multiple paths, by digitally processing received signals from the GPS satellites.

Other prior art methods include those disclosed in US6252546, WO00/69020, US5995044 and US5712641. US6252546 discloses a method and apparatus for processing multi-path reflection effects in which a determination is made of whether a received signal is a reflected signal by detecting from an input signal a pair of signals representative of whether the input signal contains right-hand or left-hand circularly polarised components and their relative power levels. The power levels are compared to determine the nature of the dominant polarisation of the input signal.

WO00/69020 discloses a wireless communication system that utilises a circularly polarised transmitting antenna with two receiving antennas responsive to respective orthogonal circular polarisations. A receiver station discriminates between the signal strengths and selects one of the two signals to process.

US5995044 discloses a GPS receiver comprising a first channel that processes line-of-sight signals and a second channel that processes multi-path signals. It then compares the results to determine if the multi-path has degraded the results of the processing of the line-of-sight signals.

US5712641 utilises an adaptive polarisation cancellation arrangement which nulls out all types of concurrent interference signals received by a GPS receiver from antenna mainlobe and sidelobe situated sources.

However, with the method wherein, as stated above, the signals having undergone the multiple paths are excluded by digitally processing the received signals from the GPS satellites, the effect is slight, and a positioning accuracy is low.

Meanwhile, a radio wave from a GPS satellite is, for example, a dextrorotatory circular polarization. Such a circular polarization (elliptical polarization) has the property that, when it is reflected by a building or the like, its polarization plane changes, and that, when the reflections recur, the polarization plane is disordered to become a linear polarization.

According to a first aspect, the present invention comprises a radio receiver wherein a radio wave having characteristics of a circular polarisation is received so as to demodulate transmission data comprising:
a first and second linear-polarisation antennas which receive the radio wave, the antennas being arranged so that a lengthwise direction of said first and second antennas are at an angle to each other within an identical plane; and
multiple-path decision processing means for detecting respective level fluctuations of the output signals of the antennas, deciding the nature of the polarisation, on the basis of results of the detections and deciding the degree of influence by multiple paths on the received radio wave on the basis of a result of the decision.

According to a second aspect, the present invention comprises a GPS receiver wherein radio waves from a plurality of GPS satellites are received so as to find a current position, comprising:
a circular-polarisation antenna and a linear-polarisation antenna which receive the radio waves from the GPS satellites; and
multiple-path decision processing means for calculating the level differences of both output signals of the antennas and deciding the degree of influence by multiple paths on the basis of the calculated level differences.

According to the GPS receiver of the present invention thus constructed, the influences by the multiple paths on the received radio waves from the GPS satellites can be accurately discriminated, and a positioning accuracy can be enhanced in case of performing positioning.

Embodiments of the present invention will now be described by way of further example only and with reference to the drawings; in which:-
Fig. 1 is a block diagram showing the construction of the first embodiment of the present invention.
Fig. 2 is a flow chart showing a practicable example of the processing operation of a multiple-path decision processing unit in Fig. 1.
Fig. 3 is a block diagram showing the construction of the second embodiment of the present invention.
Fig. 4 is an explanatory view for explaining multiple paths.

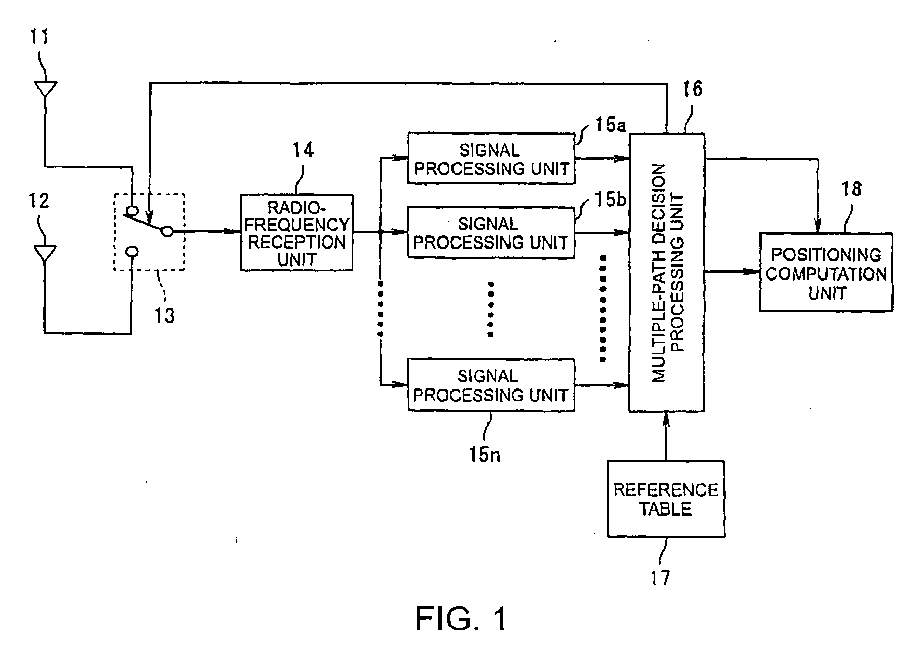

Fig. 1 shows the construction of a GPS receiver according to the first embodiment of the present invention. Since the first embodiment is based on a concept as stated below, the concept will be explained.

A radio wave from a GPS satellite is a circular polarization, for example, dextrorotatory circular polarization. In a case where the radio has undergone the influence of multiple paths, it is changed into a levorotatory circular polarization by a first reflection, and when the radio wave further repeats reflections, its polarization plane is disordered to finally become a linear polarization.

Accordingly, such a dextrorotatory circular polarization is most efficiently received by a dextrorotatory-circular-polarization antenna in a case where it does not undergo the influence of the multiple paths. Besides, in this case, if the gain of the dextrorotatory-circular-polarization antenna for the linear polarization and the gain of a linear-polarization antenna are equal, a reception output (reception gain) becomes 3 dB larger in case of receiving the dextrorotatory circular polarization by the dextrorotatory-circular-polarization antenna, than in case of receiving it by the linear-polarization antenna.

Therefore, in a case where the radio wave from the GPS satellite has been received by both the antennas without undergoing the influence of the multiple paths, the level difference between both the outputs of both the antennas becomes 3 dB.

On the other hand, in the case where the radio wave has undergone the influence of the multiple paths, the level difference between both the outputs of both the antennas becomes smaller than 3 dB.

In the GPS receiver according to the first embodiment of the present invention, therefore, the dextrorotatory-circular-polarization antenna and the linear-polarization antenna are disposed, the level difference between both the outputs of both the antennas is calculated, the degree of the influence of the multiple paths of the received radio wave is decided on the basis of the calculated level difference, and a current position is found at a high accuracy by using the radio wave which is little influenced by the multiple paths.

For this purpose, the GPS receiver according to the first embodiment includes as shown in Fig. 1, a dextrorotatory-circular-polarization antenna 11, a linear-polarization antenna 12, an antenna changeover switch 13, a radio-frequency reception unit 14, n signal processing units 15a, 15b, ···· and 15n, a multiple-path decision processing unit 16, a reference table 17, and a positioning computation unit 18.

The dextrorotatory-circular-polarization antenna 11 is an antenna which receives radio waves from a plurality of GPS satellites, and which outputs signals corresponding to the receptions. Likewise, the linear-polarization antenna 12 is an antenna which receives radio waves from a plurality of GPS satellites and which outputs signals corresponding to the receptions.

The antenna changeover switch 13 is a switch which selects either the dextrorotatory-circular-polarization antenna 11 or the linear-polarization antenna 12 on the basis of an instruction from the multiple-path decision processing unit 16. The output of the antenna 11 or 12 selected by the switch 13 is inputted to the radio-frequency reception unit 14.

The radio-frequency reception unit 14 amplifies, tunes and detects the electric signals which are outputted in accordance with the radio waves received by the dextrorotatory-circular-polarization antenna 11 or the linear-polarization antenna 12, and it extracts desired received signals so as to supply the extracted received signals to the signal processing units 15a - 15n, respectively.

The signal processing units 15a - 15n demodulate the received signals from n (for example, eight) GPS satellites a, b, ···· and n, not shown, in accordance with the output signals from the radio-frequency reception unit 14, respectively, thereby to obtain information signal data from the individual GPS satellites a, b, ···· and n as are contained in the corresponding received signals, together with the levels of the received signals. Besides, the information signal data and received signal levels obtained are temporarily stored in the multiple-path decision processing unit 16.

The multiple-path decision processing unit 16 calculates the level differences between the received signal levels of the signal processing units 15a - 15n as are obtained at the receptions of the individual radio waves from the GPS satellites a, b, ···· and n by using the dextrorotatory-circular-polarization antenna 11, and the corresponding received signal levels of the signal processing units 15a - 15n as are obtained at the receptions of the individual radio waves from the GPS satellites a, b, ···· and n by using the linear-polarisation antenna 12, respectively, and it decides the degrees of influences by multiple paths on the received radio waves from the GPS satellites a, b, ···· and n, on the basis of the calculated results of the level differences.

Besides, the multiple-path decision processing unit 16 selects the GPS satellites as to which the degrees of influences by the multiple paths on the received radio waves are low, in the number of four by way of example, on the basis of the results of the decisions of the degrees of influences by the multiple paths on the received radio waves from the GPS satellites a, b, ···· and n, and it notifies the selected GPS satellites to the positioning computation unit 18.

The reference table 17 prestores therein data in the case where, as will be stated later, the multiple-path decision processing unit 16 decides the degrees of influences by the multiple paths on the received radio waves from the GPS satellites a, b, ···· and n.

The positioning computation unit 18 computes a current position on the basis of the GPS satellites numbering, for example, four as have been notified from the multiple-path decision processing unit 16, and the information signal data from the signal processing units 15a - 15n as have been obtained on the basis of the received radio waves of the four GPS satellites.

Next, an operating example of the first embodiment thus constructed will be described with reference to Fig. 1.

First, the contact of the antenna changeover switch 13 operates at a position indicated in Fig. 1, so that the outputs of the dextrorotatory-circular-polarization antenna 11 are inputted to the radio-frequency reception unit 14. The radio-frequency reception unit 14 amplifies, tunes and detects radio waves from the GPS satellites as received by the dextrorotatory-circular-polarization antenna 11, and it extracts desired received signals so as to supply the extracted received signals to the signal processing units 15a - 15n, respectively.

Here, each GPS satellite has a cesium atomic clock mounted thereon, and it creates transmission data by encoding the time information of the clock and position information on an orbit with special codes. Thereafter, such transmission data is subjected to PSK, QPSK or the like narrow-band digital modulation. Further, the modulated output is subjected to diffusion modulation by employing a PN code which is peculiar to each satellite, whereupon the resulting output is transmitted by employing a carrier of 1575.42 [MHz].

Therefore, the signal processing units 15a - 15n supplied with the output signals from the radio-frequency reception unit 14 subject the output signals to inverse diffusions by employing the PN codes corresponding to the individual GPS satellites, thereby to demodulate the transmission data from the respective GPS satellites. When the operation is viewed in a time series, one signal processing unit demodulates the transmission data from one GPS satellite at one point of time. With the apparatus construction shown in Fig. 1, accordingly, the transmission data from the n (for example, eight) different GPS satellites can be simultaneously demodulated.

The information signal data from the n GPS satellites a, b, ···· and n as are contained in the received signals from these satellites and have been demodulated by the signal processing units 15a - 15n in this way, and the levels of the received signals, Xa, Xb, ···· and Xn, are supplied to the multiple-path decision processing unit 16 and are once stored therein.

Subsequently, the contact of the antenna changeover switch 13 is changed-over to the opposite position to the position in Fig. 1 by an instruction from the multiple-path decision processing unit 16, so that the outputs of the linear-polarization antenna 12 are inputted to the radio-frequency reception unit 14.

Therefore, the signal processing units 15a - 15n demodulate received signals from the GPS satellites a, b, ···· and n on the basis of the output signals of the linear-polarization antenna 12, respectively, thereby to obtain information signal data from the individual GPS satellites a, b, ···· and n as are contained in the corresponding received signals, together with the levels of the received signals. The information signal data and received signal levels Ya, Yb, ···· and Yn obtained are supplied to the multiple-path decision processing unit 16 and are once stored therein.

The multiple-path decision processing unit 16 calculate the level differences Δa, Δb, ···· and Δn between the output signal levels Xa, Xb, ···· and Xn of the signal processing units 15a - 15n as based on the outputs of the dextrorotatory-circular-polarization 11 and the output signal levels Ya, Yb, ···· and Yn of the signal processing units 15a - 15n as based on the outputs of the linear-polarization antenna 12, respectively, and it decides the degrees of influences by multiple paths on the received radio waves from the GPS satellites a, b, ···· and n, on the basis of the calculated results of the level differences.

Here, as stated before, in a case where the radio wave from each GPS satellite has been received without undergoing the influence of the multiple paths, the level difference between both the outputs of both the antennas 11 and 12 becomes 3 dB. On the other hand, in a case where the radio wave has undergone the influence of the multiple paths, the level difference between both the outputs of both the antennas 11 and 12 becomes smaller than 3 dB.

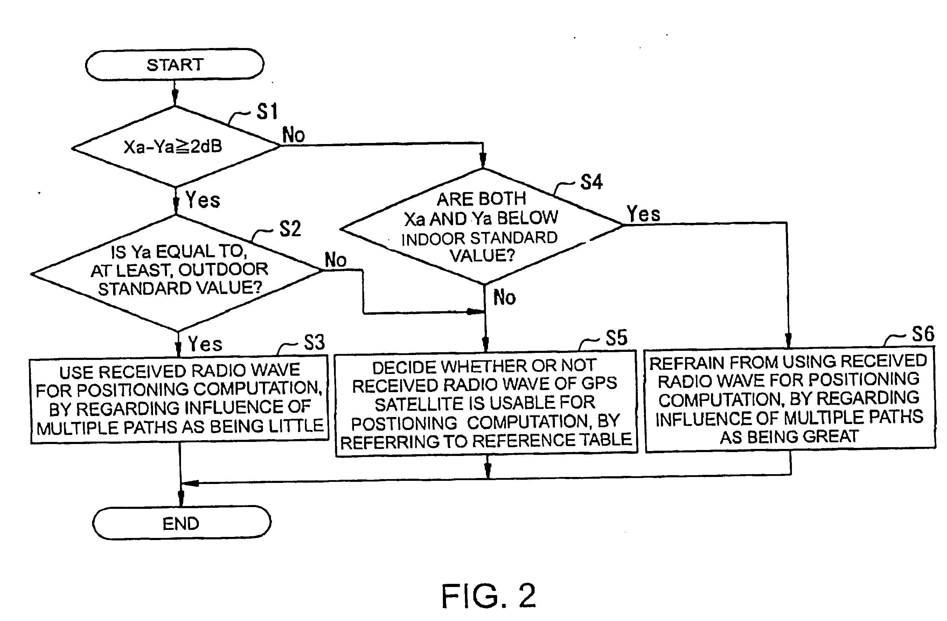

Therefore, the multiple-path decision processing unit 16 decides the presence or absence of the influence of the multiple paths on the basis of the above fact. Incidentally, a practicable example of the decision processing will be explained later with reference to Fig. 2.

Further, the multiple-path decision processing unit 16 selects the GPS satellites as to which the degrees of influences by the multiple paths on the received radio waves are low, in the number of four by way of example, on the basis of the results of the decisions of the degrees of influences by the multiple paths on the received radio waves from the GPS satellites a, b, ···· and n, and it notifies the selected GPS satellites to the positioning computation unit 18.

The reference table 17 is referred to in the case where, in this manner, the multiple-path decision processing unit 16 decides the degrees of influences by the multiple paths on the received radio waves from the GPS satellites a, b, ···· and n and then selects the GPS satellites of the received radio waves as to which the degrees of influences by the multiple paths are low, on the basis of the results of the decisions.

The positioning computation unit 18 computes a current position on the basis of the GPS satellites numbering, for example, four as have been notified from the multiple-path decision processing unit 16, and the information signal data from the signal processing units 15a - 15n as have been obtained on the basis of the received radio waves of the four GPS satellites.

Next, the practicable example of the decision processing of the multiple-path decision processing unit 16 will be explained with reference to Fig. 2.

In this example, the multiple-path processing decision unit 16 calculates in the above way, the level differences Δa, Δb, ···· and Δn between the received signal levels Xa, Xb, ···· and Xn from the signal processing units 15a - 15n as are based on the outputs of the dextrorotatory-circular-polarization antenna 11, and the corresponding received signal levels Ya, Yb, ···· and Yn from the signal processing units 15a - 15n as are based on the outputs of the linear-polarization antenna 12, respectively, and it performs the processing as shown in Fig. 2, for each of the calculated level differences Δa, Δb, ···· and Δn.

In the ensuing description, therefore, the processing in the case where the level difference Δa is calculated using the received signal level Xa and received signal level Ya of the signal processing unit 15a as are based on the received radio wave from the GPS satellite a will be explained with reference to Fig. 2.

At a step S1, whether or not the calculated level difference; Δa = (Xa - Ya) is at least 2 dB is decided. When the level difference is equal to, at least, 2 dB as the result of the decision, the routine proceeds to a step S2, and when not, the routine proceeds to a step S4.

At the step S2, whether or not the received signal level Ya is, at least, an outdoor standard value is decided. The decision is rendered for the reason that, in a case where the received signal level Ya is equal to, at least, the outdoor standard value, the influence of multiple paths is supposed to be little.

In a case where, as the result of the decision, the received signal level Ya is equal to, at least, the outdoor standard value, the routine proceeds to a step S3. At the step S3, the received radio wave of the GPS satellite a is judged to be used for a positioning computation, by regarding the influence of multiple paths as being little. In this case, accordingly, data obtained by demodulating the received radio wave of the GPS satellite a is used for the positioning computation.

In contrast, in a case where the received signal level Ya is below the outdoor standard value as the result of the decision, the routine proceeds to a step S5. In this case, the influence of multiple paths is noted in the received radio wave of the GPS satellite a, and it is empirically recognized that the received radio wave is sometimes usable and sometimes unusable for the positioning computation, depending upon various conditions.

In such a case, whether or not the received radio wave of the GPS satellite a is usable for the positioning computation should desirably be decidable in accordance with the various conditions. For this purpose, rules for deciding whether or not the received radio wave of the GPS satellite a is usable for the positioning computation, in accordance with the various conditions, is prestored in the reference table 17.

At the step S5, accordingly, whether or not the received radio wave of the GPS satellite a is usable for the positioning computation is decided by referring to the reference table 17.

At the step S4, whether or not both the received signal levels Xa and Ya are below an indoor standard value is decided. In a case where both the received signal levels Xa and Ya are below the indoor standard value as the result of the decision, the routine proceeds to a step S6. In this case, the received radio wave of the GPS satellite a is judged not to be used for the positioning computation, by regarding the influence of multiple paths as being great. In this case, accordingly, the data obtained by demodulating the received radio wave of the GPS satellite a is not used for the positioning computation.

In contrast, in a case where both the received signal levels Xa and Ya are not below the indoor standard value as the result of the decision, the routine proceeds to the step S5. At the step S5, whether or not the received radio wave of the GPS satellite a is usable for the positioning computation is decided by referring to the reference table 17.

Next, the second embodiment of the present invention will be described.

Since the second embodiment has been completed on the basis of a concept as stated below, the concept will be first explained.

By way of example, when a circular polarization from a GPS satellite is received by a linear-polarization antenna, there is the property that the output level of the linear-polarization antenna fluctuates with the rotation of the polarization plane of the circular polarization.

Therefore, whether or not a received radio wave is the circular polarization or a linear polarization can be decided in such a way that two linear-polarization antennas are prepared, that both the antennas are arranged with their lengthwise directions defining a right angle (90°) within an identical plane, and that the fluctuations of both the received signal levels of both the antennas are respectively calculated. Besides, the degrees of influences by multiple paths on the received radio waves can be discriminated by employing the results of the fluctuations.

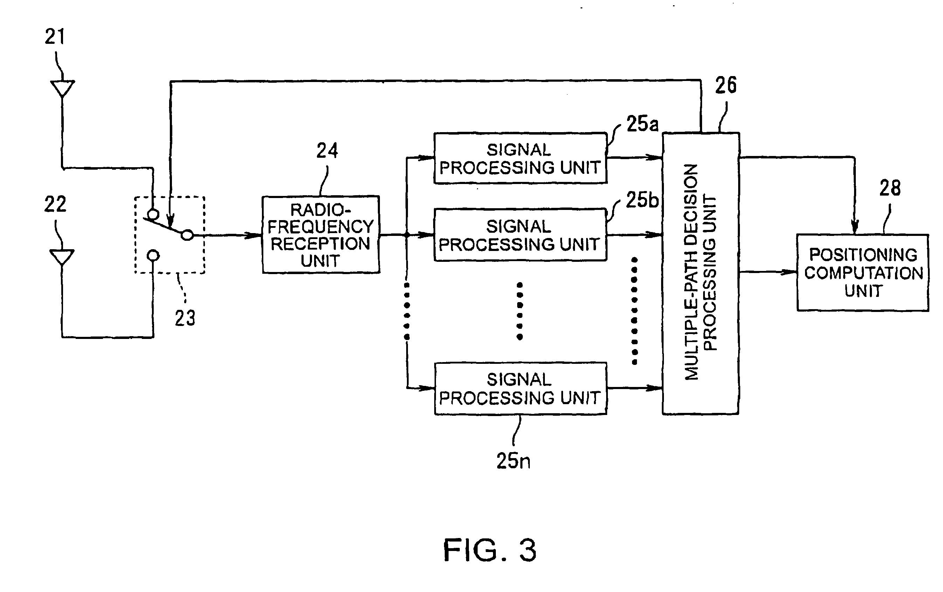

Accordingly, the second embodiment of the present invention consists in that the degree of influence by multiple paths on a received radio wave is accurately discriminated on the basis of such a concept. As shown in Fig. 3, it includes one set of linear-polarization antennas 21 and 22, an antenna changeover switch 23, a radio-frequency reception unit 24, n signal processing units 25a, 25b, ···· and 25n, a multiple-path decision processing unit 26, and a positioning computation unit 28.

The set of linear-polarization antennas 21 and 22 are antennas each of which receives radio waves from a plurality of GPS satellites so as to output signals corresponding to the receptions. Both the antennas 21 and 22 are arranged so that their lengthwise directions (senses) may define a right angle (90°) within an identical plane.

The antenna changeover switch 23 is a switch which selects either the linear-polarization antenna 21 or the linear-polarization antenna 22 on the basis of an instruction from the multiple-path decision processing unit 26. The output of the antenna 21 or 22 selected by the switch 23 is inputted to the radio-frequency reception unit 24.

The radio-frequency reception unit 24 amplifies, tunes and detects the electric signals which are outputted in accordance with the radio waves received by the linear-polarization antenna 21 or the linear-polarization antenna 22, and it extracts desired received signals so as to supply the extracted received signals to the signal processing units 25a - 25n, respectively.

The signal processing units 25a - 25n demodulate the received signals from n (for example, eight) GPS satellites a, b, ···· and n, not shown, in accordance with the output signals from the radio-frequency reception unit 24, respectively, thereby to obtain information signal data from the individual GPS satellites a, b, ···· and n as are contained in the corresponding received signals, and they obtain the levels of the corresponding received signals over predetermined time periods. Besides, the information signal data and received signal levels for the predetermined time periods as have been obtained are temporarily stored in the multiple-path decision processing unit 26.

The multiple-path decision processing unit 26 calculates the level fluctuations of the individual received signal levels on the basis of the respective received signal levels of the signal processing units 25a - 25n as are obtained at the receptions of the individual radio waves from the GPS satellites a, b, ···· and n by using the linear-polarization antenna 21, and it also calculates the level fluctuations of the individual received signal levels on the basis of the respectively corresponding received signal levels of the signal processing units 25a - 25n as are obtained at the receptions of the individual radio waves from the GPS satellites a, b, ···· and n by using the linear-polarization antenna 22. Besides, it decides the degrees of influences by multiple paths on the received radio waves from the GPS satellites a, b, ···· and n, on the basis of the calculated level fluctuations.

Further, the multiple-path decision processing unit 26 selects the GPS satellites as to which the degrees of influences by the multiple paths on the received radio waves are low, in the number of four by way of example, on the basis of the results of the decisions of the degrees of influences by the multiple paths on the received radio waves from the GPS satellites a, b, ···· and n, and it notifies the selected GPS satellites to the positioning computation unit 28.

The positioning computation unit 28 computes a current position on the basis of the GPS satellites numbering, for example, four as have been notified from the multiple-path decision processing unit 26, and the information signal data from the signal processing units 25a - 25n as have been obtained on the basis of the received radio waves of the four GPS satellites.

Next, an operating example of the second embodiment thus constructed will be described with reference to Fig. 3.

First, the contact of the antenna changeover switch 23 operates at a position indicated in Fig. 3, so that the outputs of the linear-polarization antenna 21 are inputted to the radio-frequency reception unit 24. The radio-frequency reception unit 24 amplifies, tunes and detects radio waves from the plurality of GPS satellites as received by the linear-polarization antenna 21, and it extracts desired received signals so as to supply the extracted received signals to the signal processing units 25a - 25n, respectively.

The signal processing units 25a - 25n demodulate the received signals from the GPS satellites a, b, ···· and n, in accordance with the output signals from the radio-frequency reception unit 24, respectively, thereby to obtain information signal data from the individual GPS satellites a, b, ···· and n as are contained in the corresponding received signals, and they obtain the levels of the received signals over predetermined time periods. The information signal data and received signal levels for the predetermined time periods as have been obtained are stored in the multiple-path decision processing unit 26.

Subsequently, the contact of the antenna changeover switch 23 is changed-over to the opposite position to the position in Fig. 3 by an instruction from the multiple-path decision processing unit 26, so that the outputs of the linear-polarization antenna 22 are inputted to the radio-frequency reception unit 24.

Accordingly, the signal processing units 25a - 25n demodulate the received signals from the GPS satellites a, b, ···· and n, on the basis of the outputs of the linear-polarization antenna 22, respectively, thereby to obtain information signal data from the individual GPS satellites a, b, ···· and n as are contained in the corresponding received signals, and they obtain the levels of the received signals over predetermined time periods. The information signal data and received signal levels for the predetermined time periods as have been obtained are stored in the multiple-path decision processing unit 26.

The multiple-path decision processing unit 26 calculates the level fluctuations of the individual received signal levels on the basis of the respective received signal levels of the signal processing units 25a - 25n as are obtained at the receptions of the individual radio waves from the GPS satellites a, b, ···· and n by using the linear-polarization antenna 21, and it also calculates the level fluctuations of the individual received signal levels on the basis of the respectively corresponding received signal levels of the signal processing units 25a - 25n as are obtained at the receptions of the individual radio waves from the GPS satellites a, b, ···· and n by using the linear-polarization antenna 22. Besides, it decides the degrees of influences by multiple paths on the received radio waves from the GPS satellites a, b, ···· and n, on the basis of the magnitudes of the calculated level fluctuations.

Subsequently, the multiple-path decision processing unit 26 selects the GPS satellites as to which the degrees of influences by the multiple paths on the received radio waves are low, in the number of four by way of example, on the basis of the results of the decisions of the degrees of influences by the multiple paths on the received radio waves from the GPS satellites a, b, ···· and n, and it notifies the selected GPS satellites to the positioning computation unit 28.

The positioning computation unit 28 computes a current position on the basis of the GPS satellites numbering, for example, four as have been notified from the multiple-path decision processing unit 26, and the information signal data from the signal processing units 25a - 25n as have been obtained on the basis of the received radio waves of the four GPS satellites.

Next, the third embodiment of the present invention will be described.

In the second embodiment described above, the two linear-polarization antennas 21 and 22 are included, and both the antennas 21 and 22 are arranged so that their lengthwise directions may define the right angle within the identical plane. The third embodiment consists in arranging two linear-polarization antennas within an identical plane so that their senses may be in a state less than 90°, for example, 45°.

When the senses of the two linear-polarization antennas are set to be less than 90° in this manner, the rotational direction of a circular polarization can be discriminated from the phase difference between the output fluctuations of both the antennas, and whether or not a received radio wave has undergone the influence of multiple paths can be discriminated on the basis of the discrimination of the rotational direction.

Therefore, the third embodiment consists in disposing a multiple-path decision processing unit which calculates the fluctuations of output levels from the outputs of both the antennas, which discriminates the rotational direction (levorotation or dextrorotation) of the circular polarization on the basis of the magnitudes of the calculated fluctuations, and which discriminates whether or not the received radio wave has undergone the influence of the multiple paths, on the basis of the discrimination of the rotational direction.

As described above, according to the radio receiver of the present invention, the influence of multiple paths on a received radio wave can be accurately discriminated.

Besides, according to the GPS receiver of the present invention, the influences of multiple paths on received radio waves from GPS satellites can be accurately discriminated, and a positioning accuracy can be enhanced in case of performing positioning.

## Claims

1. A radio receiver wherein a radio wave having characteristics of a circular polarisation is received so as to demodulate transmission data comprising:
a first and second linear-polarisation antennas (21, 22) which receive the radio wave, the antennas being arranged so that a lengthwise direction of said first and second antennas are at an angle to each other within an identical plane; and
multiple-path decision processing means (26) for detecting respective level fluctuations of the output signals of the antennas, deciding the nature of the polarisation, on the basis of results of the detections and deciding the degree of influence by multiple paths on the received radio wave on the basis of a result of the decision.

2. A radio receiver according to claim 1 wherein the angle between the lengthwise directions of the first and second antennas (21, 22) is substantially 90° and the multiple-path decision processing means (26) decides whether the received radio wave is circularly or linearly polarised.

3. A radio receiver according to claim 1 wherein the angle between the lengthwise directions of the first and second antennas (21, 22) is less than 90° and the multiple-path decision processing means (26) decides a rotational direction of the circular polarisation.

4. A GPS receiver wherein radio waves from a plurality of GPS satellites (a, b, .... n) are received so as to find a current position, comprising:
a circular-polarisation antenna (11) and a linear-polarisation antenna (12) which receive the radio waves from the GPS satellites; and
multiple-path decision processing means (16) for calculating the level differences of both output signals of the antennas and deciding the degree of influence by multiple paths on the basis of the calculated level differences.

5. A GPS receiver according to claim 4 wherein the circular-polarisation antenna is either a dextrorotatory or a levorotatory antenna.

6. A GPS receiver according to either claim 4 or 5 further comprising:
signal processing means (15a, 15b,...15n) for obtaining first levels of received signals of the respective GPS satellites on the basis of the individual radio waves from the plurality of GPS satellites as have been received by said circular-polarisation antenna, and obtaining second levels of the received signals of the respective GPS satellites on the basis of the individual radio waves from the plurality of GPS satellites as have been received by said linear-polarisation antenna;
selection means for calculating level differences between the first levels and the respectively corresponding second levels, deciding degrees of influence by multiple paths on the respective received signals, on the basis of the calculated level differences, and selecting the received signals as to which the degrees of influences by the multiple paths are the least, on the basis of results of the decisions; and
positioning computation means (18) for calculating the current position on the basis of the received signals selected by said selection means.

## Patentansprüche

1. Funkempfänger, wobei eine Funkwelle mit Charakteristiken einer Zirkularpolarisation empfangen wird, um Übertragungsdaten zu demodulieren, umfassend:
erste und zweite Linearpolarisationsantennen (21, 22), welche die Funkwelle empfangen, wobei die Antennen so angeordnet sind, dass Längsrichtungen der ersten und zweiten Antennen innerhalb einer identischen Ebene in einem Winkel zueinander sind; und
Mehrwegbestimmungsverarbeitungsmittel (26) zum Erfassen von jeweiligen Pegeländerungen der Ausgangssignale der Antennen, Bestimmen der Beschaffenheit der Polarisation auf der Basis von Ergebnissen der Erfassungen und Bestimmen des Grades von Einfluss durch mehrere Wege auf die empfangene Funkwelle auf der Basis eines Ergebnisses der Bestimmung.

2. Funkempfänger nach Anspruch 1, wobei der Winkel zwischen den Längsrichtungen der ersten und zweiten Antennen (21, 22) im Wesentlichen 90° beträgt und das Mehrwegbestimmungsverarbeitungsmittel (26) bestimmt, ob die empfangene Welle zirkular oder linear polarisiert ist.

3. Funkempfänger nach Anspruch 1, wobei der Winkel zwischen den Längsrichtungen der ersten und zweiten Antennen (21, 22) kleiner als 90° ist und das Mehrwegbestimmungsverarbeitungsmittel (26) eine Drehrichtung der Zirkularpolarisation bestimmt.

4. GPS-Empfänger, wobei Funkwellen von einer Mehrzahl von GPS-Satelliten (a, b, ..., n) empfangen werden, um eine aktuelle Position zu ermitteln, umfassend:
eine Zirkularpolarisationsantenne (11) und eine Linearpolarisationsantenne (12, welche die Funkwellen von den GPS-Satelliten empfangen; und
Mehrwegbestimmungsverarbeitungsmittel (16) zum Berechnen der Pegelunterschiede von beiden Ausgangssignalen der Antennen und Bestimmen des Grades von Einfluss durch mehrere Wege auf der Basis der berechneten Pegelunterschiede.

5. GPS-Empfänger nach Anspruch 4, wobei die Zirkularpolarisationsantenne entweder eine rechtsdrehende oder eine linksdrehende Antenne ist.

6. GPS-Empfänger nach Anspruch 4 oder 5, ferner umfassend:
Signalverarbeitungsmittel (15a, 15b, ..., 15n) zum Erhalten von ersten Pegeln von empfangenen Signalen der jeweiligen GPS-Satelliten auf der Basis der einzelnen Funkwellen von der Mehrzahl von GPS-Satelliten, wie sie durch die Zirkularpolarisationsantenne empfangen wurden, und Erhalten von zweiten Pegeln der empfangenen Signale der jeweiligen GPS-Satelliten auf der Basis der einzelnen Funkwellen von der Mehrzahl von GPS-Satelliten, wie sie durch die Linearpolarisationsantenne empfangen wurden;
Wahlmittel zum Berechnen von Pegelunterschieden zwischen den ersten Pegeln und den jeweiligen entsprechenden zweiten Pegeln, Bestimmen von Graden von Einfluss durch mehrere Wege auf die jeweiligen empfangenen Signale auf der Basis der berechneten Pegelunterschiede und Auswählen der empfangenen Signale auf der Basis von Ergebnissen der Bestimmungen im Hinblick darauf, welche Grade von Einflüssen durch die mehreren Wege die niedrigsten sind; und
Positionierungsberechnungsmittel (18) zum Berechnen der aktuellen Position auf der Basis der empfangenen Signale, die durch das Wahlmittel ausgewählt wurden.

## Revendications

1. Récepteur radio, dans lequel une onde radio ayant des caractéristiques de polarisation circulaire est reçue de manière à démoduler des données de transmission, comprenant :
une première et une seconde antennes de polarisation linéaire (21, 22) qui reçoivent l'onde radio, les antennes étant disposées de manière à ce que les sens longitudinaux desdites première et seconde antennes soient en angle par rapport à l'autre dans un plan identique ; et
un moyen de traitement de décision à trajet multiple (26) pour détecter des fluctuations de niveau respectives des signaux de sortie des antennes, décider de la nature de la polarisation à partir de résultats des détections et décider du degré d'influence par des trajets multiples sur l'onde radio reçue à partir d'un résultat de la décision.

2. Récepteur radio selon la revendication 1, dans lequel l'angle entre les sens longitudinaux des première et seconde antennes (21, 22) est sensiblement de 90° et le moyen de traitement de décision à trajet multiple (26) décide si l'onde radio reçue est polarisée circulairement ou linéairement.

3. Récepteur radio selon la revendication 1, dans lequel l'angle entre les sens longitudinaux des première et seconde antennes (21, 22) est inférieur à 90° et le moyen de traitement de décision à trajet multiple (26) décide d'un sens de rotation de la polarisation circulaire.

4. Récepteur GPS dans lequel des ondes radio d'une pluralité de satellites GPS (a, b, ..., n) sont reçues de manière à trouver une position en cours, comprenant :
une antenne de polarisation circulaire (11) et une antenne de polarisation linéaire (12) qui reçoivent les ondes radio des satellites GPS ; et
un moyen de traitement de décision à trajet multiple (16) pour calculer les différences de niveau des deux signaux de sortie des antennes et décider du degré d'influence par des trajets multiples à partir des différences de niveau calculées.

5. Récepteur GPS selon la revendication 4, dans lequel l'antenne de polarisation circulaire est soit une antenne dextrogyre, soit une antenne levogyre.

6. Récepteur GPS selon la revendication 4 ou 5, comprenant en outre :
un moyen de traitement de signaux (15a, 15b, ... 15n) pour obtenir de premiers niveaux de signaux reçus des satellites GPS respectifs à partir des ondes radio individuelles de la pluralité de satellites GPS telles que reçues par ladite antenne de polarisation circulaire et obtenir de seconds niveaux des signaux reçus des satellites GPS respectifs à partir des ondes radio individuelles de la pluralité de satellites GPS telles que reçues par ladite antenne de polarisation linéaire ;
un moyen de sélection pour calculer des différences de niveau entre les premiers niveaux et les seconds niveaux respectivement correspondants, décider des degrés d'influence par des trajets multiples sur les signaux respectifs reçus à partir des différences de niveau calculées et sélectionner les signaux reçus pour lesquels les degrés d'influences par les trajets multiples sont les plus faibles à partir des résultats des décisions ; et
un moyen de calcul de positionnement (18) pour calculer la position en cours à partir des signaux reçus sélectionnés par ledit moyen de sélection.
